# FASCICULE DE BREVET EUROPEEN

(11) **EP 1 436 975 B1**
(45) Date de publication et mention de la délivrance du brevet: **16.03.2005**
(21) Numéro de dépôt: 02798001.0
(22) Date de dépôt: 10.09.2002
(51) Int. Cl.: H04M 3/53, H04M 1/725

(54) **PROCEDE ET TERMINAL D'ENVOI DE SMS**
SMS-NACHRICHTENVERFAHREN UND ENDGERÄT
SHORT MESSAGE SERVICE METHOD AND TERMINAL

(30) Priorité: 11.09.2001 FR 0111762
(43) Date de publication de la demande: 14.07.2004
(73) Titulaire: FRANCE TELECOM, 75015 Paris (FR)
(72) Inventeur: LEGAY, Philippe, F-22700 Louannec (FR); RIOU, Valérie, F-92190 Meudon (FR); JUIF, François, F-25000 Besançon (FR)
(74) Mandataire: Jeune, Pascale
(86) Numéro de dépôt international: PCT/FR2002/003062
(87) Numéro de publication internationale: WO 2003/024076

(56) Documents cités:
- EP-A- 0 318 428
- EP-A- 0 936 794
- EP-A- 1 122 958
- WO-A-01/17275
- WO-A-98/16412
- WO-A-98/54846
- WO-A-99/14918
- FR-A- 2 604 319
- GB-A- 2 270 443
- US-A1- 2001 011 021

## Description

### Domaine de l'invention

La présente invention se rapporte au domaine des télécommunications et plus particulièrement à l'envoi de messages courts à partir d'un terminal de communication.

### Description de l'art antérieur

Actuellement, un service d'envoi de messages courts, service plus connu par les sigles SMS abréviation des termes anglo-saxons Short Messages Service, est disponible sur réseau mobile.

Ce service permet à un utilisateur d'un téléphone mobile de saisir le texte d'un message court et d'envoyer ce texte à un destinataire ayant lui-même un téléphone mobile. Devant le succès de ce service, ce dernier a été étendu au réseau téléphonique fixe, en particulier en Italie par la société Telecom Italia. En parallèle, il a fallu développer des terminaux spécifiques pour prendre en compte les caractéristiques du réseau téléphonique fixe. Ainsi, il existe un terminal développé par la société Viking Télécom qui comporte un écran d'affichage d'un message court, un clavier alphanumérique, une touche envoi, et une touche de mode. Avec un tel terminal la procédure est généralement la suivante : l'utilisateur du terminal saisit à l'aide du clavier le texte du message court à envoyer, il compose ensuite le numéro téléphonique du destinataire et déclenche l'envoie du message court.

Un tel procédé a pour inconvénient de nécessiter la connaissance de la procédure d'envoi de tels messages pour tout envoi d'un message. Cette contrainte a pour conséquence d'écarter de l'utilisation du service des utilisateurs potentiels tels que des personnes âgées.

Un des objectifs de l'invention est de proposer un service d'envoi de messages courts qui ne présente pas l'inconvénient précité et qui soit par suite plus simple d'emploi.

### Résumé de l'invention

A cette fin, la présente invention, a pour objet un service d'envoi de messages courts à partir d'un terminal d'un utilisateur, ce terminal étant relié au réseau téléphonique fixe par une ligne téléphonique identifiée par un numéro téléphonique dit appelant. Le procédé comprend les étapes initiales qui consistent :
- à établir pour la ligne téléphonique, un nombre déterminé d'enregistrements qui se composent chacun d'un message court associé à au moins un numéro téléphonique destinataire,
- à mémoriser chaque enregistrement,
- à affecter des moyens interactifs du terminal à l'envoi de messages courts,
- à associer chaque moyen interactif affecté avec un enregistrement,
Et en ce que pour chaque envoi d'un message court à partir du terminal, le procédé comprend les étapes qui consistent :
- à détecter, par le terminal, l'activation d'un des moyens interactifs affectés du terminal et
- à transmettre à chaque numéro téléphonique destinataire contenu dans l'enregistrement associé au moyen interactif activé le message court contenu dans le même enregistrement.

L'invention a en outre pour objet un terminal d'envoi de messages courts pour la mise en oeuvre d'un procédé selon l'invention. Le terminal comprend au moins :
- un moyen interactif affecté à l'envoi de messages courts,
- autant d'espaces mémoires que de moyens interactifs affectés, chaque espace mémoire étant associé à un moyen interactif affecté et contenant une information spécifique de ce moyen interactif affecté.

Ainsi, par l'établissement d'un nombre déterminé de messages courts et de numéros téléphoniques destinataires enregistrés, un service d'envoi de messages courts selon l'invention permet à toute personne de pouvoir envoyer un message court. En effet, l'utilisateur déclenche l'envoi d'un message court en activant uniquement un des moyens interactifs affectés du terminal ; le moyen interactif étant associé avec un enregistrement, son activation correspond au choix d'un message court à envoyer et du destinataire, ou des destinataires, du message.

Selon le mode de mise en oeuvre de l'invention, l'activation d'un des moyens interactifs affectés du terminal peut consister en l'appui sur une touche du terminal, en la sélection d'une touche sur un écran tactile ou encore en une commande vocale détectée par un microphone du terminal, voire en la réception d'une fréquence émise par un vêtement ou par un objet personnel de l'utilisateur.

De manière avantageuse, la présente invention simplifie la procédure d'envoi d'un message court en réduisant au strict minimum l'intervention de l'utilisateur au cours de la procédure d'envoi.

### Brève description des dessins

D'autres caractéristiques et avantages de l'invention apparaîtront lors de la description qui suit d'exemples particuliers et non limitatifs de réalisation de l'invention ; ces exemples étant décrits en regard des figures annexées suivantes données à titre d'illustration.
La figure 1 est un schéma des différentes étapes d'un service selon l'invention.
La figure 2 est un schéma d'un exemple particulier d'un terminal d'envoi de messages courts selon l'invention.

### Description d'un mode de réalisation

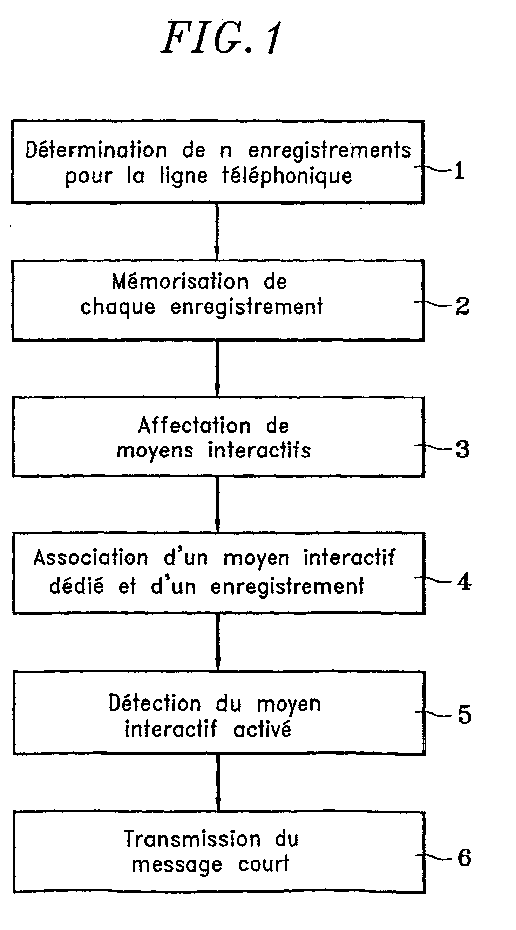

Un service d'envoi de messages courts selon l'invention, à partir d'un terminal d'un utilisateur relié à un réseau téléphonique fixe par une ligne téléphonique identifiée par un numéro téléphonique dit numéro téléphonique appelant, se déroule selon plusieurs étapes illustrées par la figure 1.

Dans une première étape initiale, le procédé consiste à établir 1 un nombre n déterminé d'enregistrements pour la ligne téléphonique. Chaque enregistrement est composé d'un message court et d'au moins un numéro téléphonique destinataire. Le nombre n d'enregistrements est fonction du mode de réalisation du procédé et est au minimum de un.

Selon une première variante, les mêmes enregistrements peuvent être établis pour plusieurs lignes téléphoniques. Cette variante a un intérêt par exemple lorsqu'un même utilisateur a dans sa maison deux lignes téléphoniques avec leur numéro téléphonique respectif. Dans ces conditions, l'utilisateur a accès au même service d'envoi de messages courts quelle que soit la ligne téléphonique utilisée.

Selon une seconde variante, plusieurs groupes d'enregistrements peuvent être associés à une même ligne téléphonique. Ceci permet avantageusement à plusieurs utilisateurs d'utiliser la même ligne téléphonique tout en ayant chacun leur propre groupe d'enregistrements. Dans ces conditions soit l'utilisateur s'identifie auprès du service pour que celui-ci sélectionne le groupe d'enregistrements de l'utilisateur, soit l'utilisateur sélectionne lui-même son groupe d'enregistrements.

Dans une deuxième étape initiale, le procédé consiste à mémoriser 2 chaque enregistrement.

Selon un premier mode de mise en oeuvre du procédé, chacun des enregistrements d'une ligne téléphonique est mémorisé par le terminal de l'utilisateur branché à la ligne téléphonique.

Selon un second mode de mise en oeuvre du procédé, chacun des enregistrements d'une ligne téléphonique est mémorisé avec le numéro téléphonique appelant correspondant à cette ligne téléphonique, dans une base de données d'un réseau de télécommunication englobant le réseau téléphonique fixe. La base de données est gérée par un serveur de livraison de messages courts du réseau de télécommunication.

Dans une troisième étape, le procédé consiste à affecter 3 des moyens interactifs du terminal à l'envoi de messages courts. En fonction du terminal, les moyens interactifs peuvent consister en des touches, en des zones d'un écran tactile ou en un dispositif de reconnaissance de fréquences tant vocales que HF.

Dans une quatrième étape, le procédé consiste à associer 4 chaque moyen interactif affecté avec un enregistrement. Ainsi, à un instant donné, à chaque moyen interactif affecté correspond un unique enregistrement. Par suite, l'activation d'un moyen interactif permet de sélectionner automatiquement un seul et unique enregistrement. Lorsque plusieurs groupes d'enregistrements sont associés à la même ligne téléphonique, seuls les enregistrements du groupe sélectionné préalablement peuvent faire l'objet d'une association avec un moyen interactif.

Ces étapes initiales se déroulent préalablement à tout accès par l'utilisateur au service d'envoi de messages courts.

A chaque demande d'accès au service par l'utilisateur pour l'envoi d'un message court, le procédé comprend les étapes suivantes.

Dans une première étape, le procédé consiste à détecter 5 par le terminal, l'activation d'un des moyens interactifs affectés du terminal. Il peut s'agir de détecter par exemple l'activation d'une touche du terminal, la stimulation d'une touche d'un écran tactile ou encore la réception d'une fréquence vocale, voire d'une fréquence HF. L'activation d'un des moyens interactifs affectés du terminal permet de sélectionner un seul et unique enregistrement.

Dans une deuxième étape, le procédé consiste à transmettre 6 au numéro téléphonique destinataire, ou à chaque numéro téléphonique destinataire, le message court contenu dans l'enregistrement sélectionné.

Selon le premier mode de mise en oeuvre du procédé, la transmission du message court consiste :
- à composer par le terminal un numéro de téléphone d'un serveur de livraison de messages courts d'un réseau de télécommunication englobant le réseau téléphonique fixe, pour établir une connexion entre le terminal et le serveur et,
- une fois la connexion établie avec le serveur, à émettre par le terminal le texte du message court contenu dans l'enregistrement associé au moyen interactif affecté activé et chaque numéro téléphonique destinataire contenu dans ce même enregistrement.

Selon le second mode de mise en oeuvre du procédé, la transmission du message court consiste :
- à composer par le terminal un numéro de téléphone du serveur de livraison de messages courts, pour établir une connexion entre le terminal et le serveur et,
- une fois la connexion établie avec le serveur, à émettre par le terminal un code associé au moyen interactif affecté activé, ,
- après identification par le serveur du numéro téléphonique appelant, à extraire de la base de données par le serveur les enregistrements établis pour la ligne téléphonique identifiée par le numéro téléphonique appelant,
- à partir du code, à extraire des enregistrements par le serveur l'enregistrement associé au moyen interactif affecté activé et
- à émettre par le serveur le texte du message court contenu dans l'enregistrement associé au moyen interactif affecté activé et chaque numéro téléphonique destinataire contenu dans ce même enregistrement.

Selon une variante au second mode de mise en oeuvre du procédé, ce dernier comprend en outre l'étape initiale qui consiste :
- à déterminer une interface de personnalisation à la base de données.

Et, pour modifier le contenu d'un enregistrement établi pour la ligne téléphonique, le procédé comprend en outre l'étape qui consiste :
- à communiquer à partir d'un terminal de communication avec l'interface de personnalisation.

L'interface de personnalisation à la base de données est gérée par exemple par le serveur de gestion de la base de données qui peut être accessible via un réseau internet à partir d'un terminal de communication tel un ordinateur personnel, ou via le réseau téléphonique fixe à partir d'un terminal de communication tel un terminal Minitel®.

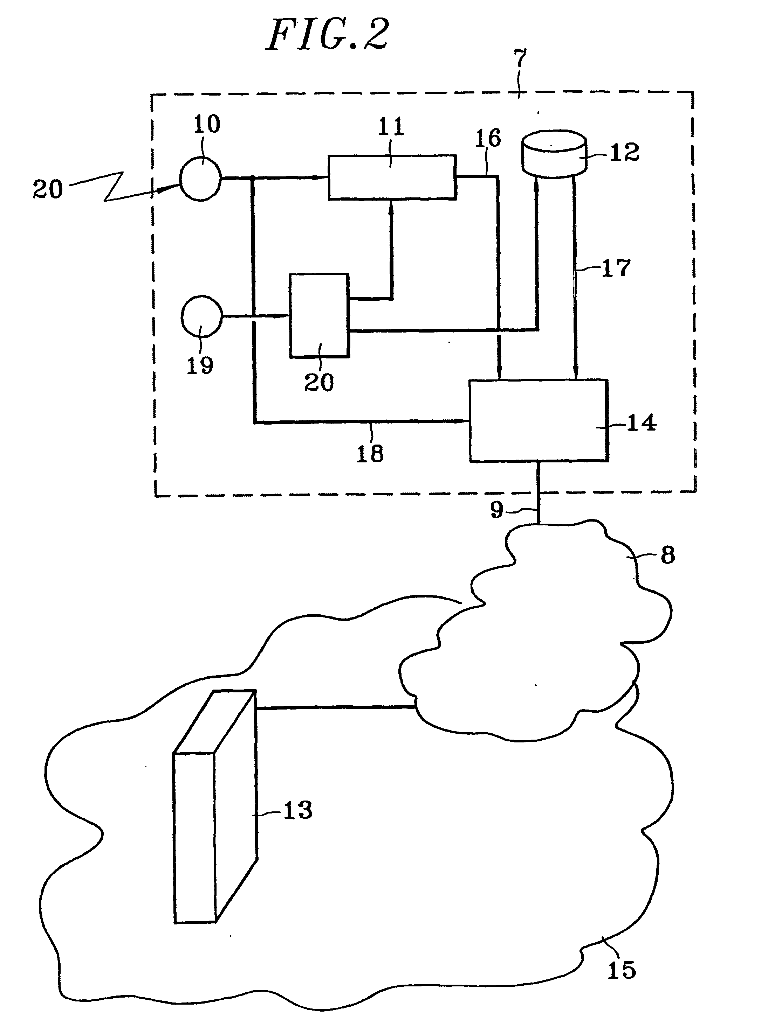

Un schéma d'un exemple particulier d'un terminal 7 d'envoi de messages courts relié à un réseau 8 téléphonique fixe par une ligne 9 téléphonique, pour la mise en oeuvre d'un procédé selon l'invention, est représenté à la figure 2.

Le terminal 7 comprend un moyen 10 interactif affecté à l'envoi de messages courts, un espace 11 mémoire associé au moyen 10 interactif affecté, un moyen 12 de mémorisation d'un numéro téléphonique d'un serveur 13 de livraison de messages courts et un moyen 14 téléphonique.

Le moyen 10 interactif affecté à l'envoi de messages courts consiste selon l'exemple en une touche du terminal 7. La touche affectée est disposée sur le boîtier du terminal et est reliée à l'espace 11 mémoire. Selon d'autres modes de réalisation du terminal, ce dernier peut comprendre plusieurs moyens interactifs affectés qui peuvent consister chacun en une touche, qui peuvent comprendre un dispositif de reconnaissance de fréquence vocale ou encore qui peuvent consister en un récepteur fréquentiel et en un nombre déterminé de filtres sélectifs. Quel que soit le mode de réalisation, chaque moyen interactif est relié à un espace mémoire.

L'espace 11 mémoire contient une information spécifique du moyen 10 interactif affecté. Selon d'autres modes de réalisation du terminal, ce dernier peut comprendre plusieurs espaces mémoires. Quel que soit le mode de réalisation, le terminal comprend au moins autant d'espaces mémoires que de moyens interactifs affectés. Chaque espace mémoire fait partie d'une mémoire telle par exemple une mémoire PROM, EEPROM ou RAM, ou d'une puce spécifique tel un microprocesseur.

Selon un premier mode de réalisation du terminal, l'information consiste en un enregistrement de la ligne téléphonique, c'est-à-dire en un message court et en au moins un numéro téléphonique destinataire.

Selon un second mode de réalisation du terminal, l'information consiste en un code spécifique du moyen interactif associé à l'espace mémoire. Selon ce mode de réalisation, les données transmises correspondent uniquement au contenu du code.

Le moyen 12 de mémorisation mémorise au moins un numéro téléphonique d'un serveur 13 de livraison de messages courts d'un réseau 15 de télécommunication englobant le réseau 8 téléphonique fixe. Lorsque plusieurs numéros téléphoniques sont mémorisés chacun peut être associé à un groupe d'enregistrements et activé en même temps que le groupe.

Le moyen 14 téléphonique est en relation avec la sortie 16 de l'espace 11 mémoire, la sortie 17 du moyen de mémorisation et la sortie 18 du moyen 10 interactif affecté. Le moyen 14 téléphonique est relié au réseau 8 téléphonique fixe par la ligne 9 téléphonique.

Lorsque le réseau téléphonique fixe est un réseau téléphonique commuté, RTC en abrégé, le moyen téléphonique comprend au moins un dispositif d'ouverture calibrée de la ligne, un dispositif d'adaptation à la ligne, un dispositif de numérotation, un dispositif d'envoi de données et un dispositif de commande.

Le dispositif d'ouverture calibrée comprend essentiellement un relais associé à une commande d'ouverture/fermeture du relais.

Le dispositif d'adaptation à la ligne adapte l'impédance du moyen téléphonique à la ligne. A titre d'exemple, il consiste essentiellement en un transformateur.

Le dispositif de numérotation génère un numéro de téléphone, module chaque chiffre suivant un procédé plus connu par les sigles anglo-saxons DTMF, abréviation des termes Dual Tone Modulation Frequency et émet le signal modulé sur la ligne par l'intermédiaire du dispositif d'adaptation. A titre d'exemple, le dispositif de numérotation consiste essentiellement en un convertisseur numérique analogique et un modulateur. Lorsque le réseau téléphonique fixe est un réseau téléphonique numérique, le numéro de téléphone est transmis sous forme numérique au moyen du canal D.

Le dispositif d'envoi de données émet sur la ligne le contenu de l'espace mémoire associé au moyen interactif affecté activé par l'intermédiaire du dispositif d'adaptation. Ainsi, le code ou l'enregistrement qui se compose d'un ou de numéro(s) téléphonique(s) destinataire(s) et des données correspondant au message court, est émis suivant un protocole déterminé, par exemple le protocole V23 d'échange de données.

Le dispositif de commande commande les différents dispositifs du terminal. Il consiste essentiellement en un calculateur qui peut être un circuit programmable tel un microprocesseur.

Selon une variante de réalisation du terminal, le terminal 7 comporte une interface de personnalisation. Cette interface comporte au moins une touche 19 d'entrée dans le mode de personnalisation et un dispositif 20 de gestion de l'interface et du déroulement du processus de personnalisation. En fonction de la réalisation du terminal, le processus de personnalisation permet d'une part de modifier chaque numéro téléphonique d'un serveur de livraison de messages courts mémorisé dans le terminal, chaque numéro téléphonique destinataire et le contenu de chaque message court ou de chaque code et éventuellement de modifier le groupe d'enregistrements sélectionné. D'autre part, le processus de personnalisation permet d'activer un des numéros téléphoniques de serveur de livraison de messages courts mémorisés dans le terminal. Par défaut, le numéro téléphonique actif est le dernier numéro téléphonique activé. Selon une variante, une touche peut être affectée à la sélection d'un groupe d'enregistrements pour permettre à des utilisateurs distincts d'utiliser un même terminal. La modification du contenu de chaque message court ne peut être mise en oeuvre que si le terminal comprend un clavier alphanumérique ou possède une entrée pour connecter un tel clavier.

Une première mise en oeuvre du service d'envoi de messages courts, à partir d'un terminal selon un des modes de réalisation précédemment décrits, peut-être la suivante. L'utilisateur appuie sur une des touches 10 affectées du terminal 7. L'activation 20 de la touche 10 déclenche la lecture par le moyen 14 téléphonique du contenu de l'espace 11 mémoire relié à cette touche 10. Le moyen 14 téléphonique extrait le numéro téléphonique destinataire et le contenu du message court du contenu de l'espace 11 mémoire. Le moyen 14 téléphonique déclenche la prise de ligne, compose le numéro téléphonique actif du serveur 13 de livraison de messages courts contenu dans le moyen 12 de mémorisation. Une fois que la connexion avec le serveur 13 est établie, le moyen 14 téléphonique émet le contenu de l'enregistrement sur la ligne 9 téléphonique, c'est-à-dire le numéro téléphonique destinataire et le contenu du message court. Lorsque les données sont émises, le moyen 14 téléphonique met fin à la connexion avec le serveur 13. Le serveur 13 entreprend alors de délivrer son message court au destinataire. Le protocole respecté pour la livraison dépend du fait que le destinataire est un abonné du réseau téléphonique fixe ou du réseau téléphonique mobile. Si le destinataire est un abonné du réseau téléphonique mobile, le protocole de livraison est celui utilisé par le réseau téléphonique mobile, et la livraison est effectuée par l'intermédiaire d'une connexion à un SMSC, abréviation des termes anglo-saxons Short Message Service Center, qui fait le lien avec le destinataire.

Une seconde mise en oeuvre du service d'envoi de messages courts, à partir d'un terminal selon un des modes de réalisation ci-dessus décrits, peut-être la suivante. L'utilisateur appuie sur une des touches 10 affectées du terminal 7. L'activation 20 de la touche 10 déclenche le transfert au moyen 14 téléphonique du contenu de l'espace 11 mémoire relié à cette touche 10. En parallèle, l'activation 20 de la touche 10 active le dispositif de commande qui récupère le contenu de l'espace 11 mémoire et en extrait le code. Le dispositif de commande déclenche la prise de ligne, puis commande au dispositif de numérotation de composer le numéro téléphonique actif du serveur 13 de livraison de messages courts, puis une fois que la connexion avec le serveur 13 est établie, il commande au dispositif d'envoi de données d'émettre sur la ligne 9 les données correspondant au code. Lorsque les données sont émises, le moyen 14 téléphonique met fin à la connexion avec le serveur 13. Le serveur 13 extrait le groupe d'enregistrements de la ligne 9 téléphonique à laquelle est branché le terminal 7, à l'aide du numéro téléphonique appelant qu'il a enregistré lors de la connexion. A l'aide du code émis par le terminal 7, le serveur 13 pointe sur un des enregistrements du groupe selon une relation déterminée. Par exemple, le code peut correspondre au rang de l'enregistrement par rapport au premier enregistrement. Le serveur 13 extrait le numéro téléphonique destinataire et le message court contenus dans cet enregistrement. Enfin le serveur 13 entreprend de délivrer le message court au destinataire. Selon une variante, l'enregistrement peut comprendre plusieurs numéros téléphoniques destinataires. Le même message court est ainsi délivré à chacun des destinataires.

## Revendications

1. Service d'envoi de messages courts à partir d'un terminal (7) d'un utilisateur, ce terminal (7) étant relié au réseau (8) téléphonique fixe par une ligne (9) téléphonique identifiée par un numéro téléphonique dit appelant, **caractérisé en ce qu'**il comprend les étapes initiales qui consistent :
- à établir (1) pour la ligne (9) téléphonique, un nombre déterminé d'enregistrements qui se composent chacun d'un message court associé à au moins un numéro téléphonique destinataire,
- à mémoriser (2) chaque enregistrement par le terminal (7),
- à affecter (3) des moyens (10) interactifs du terminal (7) à l'envoi de messages courts,
- à associer (4) chaque moyen (10) interactif affecté avec un enregistrement,
et **en ce que** pour chaque envoi d'un message court à partir du terminal (7), il comprend les étapes qui consistent :
- à détecter (5) par le terminal (7) l'activation d'un des moyens (10) interactifs affectés du terminal (7) pour déclencher la transmission, à chaque numéro téléphonique destinataire contenu dans l'enregistrement associé au moyen (10) interactif activé, du message court contenu dans le même enregistrement, la transmission se déroulant selon les étapes suivantes qui consistent :
- à composer par le terminal (7) un numéro de téléphone d'un serveur (13) de livraison de messages courts d'un réseau (15) de télécommunication englobant le réseau (8) téléphonique fixe, pour établir une connexion entre le terminal (7) et le serveur (13) et,
- une fois la connexion établie avec le serveur (13), à émettre par le terminal (7) le texte du message court contenu dans l'enregistrement associé au moyen (10) interactif affecté activé et chaque numéro téléphonique destinataire contenu dans ce même enregistrement.

2. Service d'envoi de messages courts selon la revendication 1, dans lequel chaque association de chaque moyen (10) interactif affecté avec un enregistrement dépend d'un identifiant de l'utilisateur et, en ce que le service comprend en outre l'étape qui consiste, préalablement à la détection (5) par le terminal de l'activation d'un des moyens (10) interactifs, à acquérir un identifiant de l'utilisateur pour déterminer, pour chaque moyen (10) interactif affecté, l'enregistrement associé.

3. Service d'envoi de messages courts à partir d'un terminal (7) d'un utilisateur, ce terminal (7) étant relié au réseau (8) téléphonique fixe par une ligne (9) téléphonique identifiée par un numéro téléphonique dit appelant, **caractérisé en ce qu'**il comprend les étapes initiales qui consistent :
- à établir (1) pour la ligne (9) téléphonique, un nombre déterminé d'enregistrements qui se composent chacun d'un message court associé à au moins un numéro téléphonique destinataire,
- à mémoriser (2) chaque enregistrement par une base de données d'un réseau (15) de télécommunication englobant le réseau (8) téléphonique fixe,
- à affecter (3) des moyens (10) interactifs du terminal (7) à l'envoi de messages courts,
- à associer (4) chaque moyen (10) interactif affecté avec un enregistrement,
et **en ce que** pour chaque envoi d'un message court à partir du terminal (7), il comprend les étapes qui consistent :
- à détecter (5) par le terminal (7) l'activation d'un des moyens (10) interactifs affectés du terminal (7) pour déclencher la transmission, à chaque numéro téléphonique destinataire contenu dans l'enregistrement associé au moyen (10) interactif activé, du message court contenu dans le même enregistrement, la transmission se déroulant selon les étapes suivantes qui consistent :
- à composer par le terminal (7) un numéro de téléphone d'un serveur (13) de livraison de messages courts du réseau (15) de télécommunication, pour établir une connexion entre le terminal (7) et le serveur (13) et,
- une fois la connexion établie, à émettre par le terminal (7) un code associé au moyen (10) interactif affecté activé,
- après identification par le serveur (13) du numéro téléphonique appelant, à extraire de la base de données par le serveur (13) les enregistrements établis pour la ligne (9) téléphonique identifiée par le numéro téléphonique appelant,
- à partir du code, à extraire des enregistrements par le serveur (13) l'enregistrement associé au moyen (10) interactif affecté activé et
- à émettre par le serveur (13) le texte du message court contenu dans l'enregistrement associé au moyen (10) interactif affecté activé et chaque numéro téléphonique destinataire contenu dans ce même enregistrement.

4. Service d'envoi de messages courts selon la revendication 3, dans lequel chaque association de chaque moyen (10) interactif affecté avec un enregistrement dépend d'un identifiant de l'utilisateur et, en ce que le service comprend en outre l'étape qui consiste, préalablement à la détection (5) par le terminal de l'activation d'un des moyens (10) interactifs, à acquérir un identifiant de l'utilisateur pour déterminer, pour chaque moyen (10) interactif affecté, l'enregistrement associé.

5. Service d'envoi de messages courts selon la revendication 4, **caractérisé en ce qu'**il comprend en outre l'étape qui consiste :
- une fois la connexion établie avec le serveur (13), à émettre en outre par le terminal (7) l'identifiant de l'utilisateur,
et **en ce que** l'extraction de l'enregistrement associé au moyen (10) interactif affecté activé est effectué en outre à partir de l'identifiant de l'utilisateur.

6. Service d'envoi de messages courts selon l'une des revendications 4 et 5, **caractérisé en ce qu'**il comprend en outre l'étape initiale qui consiste :
- à déterminer une interface de personnalisation à la base de données, et **en ce que** pour modifier le contenu d'un enregistrement établi pour la ligne téléphonique le procédé comprend en outre l'étape qui consiste :
- à communiquer à partir d'un terminal de communication avec l'interface de personnalisation.

7. Terminal (7) d'envoi de messages courts ayant des moyens de mise en oeuvre des étapes exécutées par le terminal de l'une des revendications précédentes, et comprenant au moins :
- un moyen (10) interactif affecté à renvoi de messages courts,
- autant d'espaces (11) mémoires que de moyens (10) interactifs affectés, chaque espace (11) mémoire étant associé à un moyen (10) interactif affecté et contenant une information spécifique de ce moyen (10) interactif affecté et,
- au moins un moyen (12) de mémorisation d'au moins un numéro téléphonique d'un serveur (13) de livraison de messages courts du réseau (15) de télécommunication,

8. Terminal (7) d'envoi de messages courts selon la revendication 7, **caractérisé en ce qu'**il comprend en outre un interface (19, 20) de personnalisation pour modifier le contenu d'un espace (11) mémoire et/ou pour modifier chaque numéro téléphonique d'un serveur (13) de livraison de messages courts mémorisé dans le terminal (7).

9. Terminal (7) d'envoi de messages courts selon l'une des revendications 7 et 8, dans lequel chaque moyen (10) interactif consiste en une touche.

10. Terminal (7) d'envoi de messages courts selon l'une des revendications 7 et 8, dans lequel chaque moyen (10) interactif comprend un dispositif de reconnaissance de fréquence vocale.

11. Terminal (7) d'envoi de messages courts selon l'une des revendications 7 et 8, dans lequel chaque moyen (10) interactif comprend un dispositif de reconnaissance de fréquence HF.

## Claims

1. A service for the transmission of short messages from a terminal (7) of a user, this terminal (7) being connected to the fixed telephone network (8) by a telephone line (9) identified by a telephone number known as the calling number, **characterised in that** it includes the initial stages which consist of:
- establishment (1), for the telephone line (9), of a specified number of records, each composed of a short message associated with at least one called telephone number,
- storage (2) of each record by the terminal (7),
- assignment (3) of interactive means (10) of the terminal (7) to the transmission of short messages,
- association (4) of each assigned interactive means (10) with a record,
and **in that** for each transmission of a short message from the terminal (7), it includes the stages which consist of:
- detection (5) by the terminal (7) of the activation of one of the assigned interactive means (10) of the terminal (7) in order to trigger the transmission of the short message contained **in that** same record to each called telephone number contained in the record associated with the activated interactive means (10), this transmission taking place in accordance with the following stages which consist of:
- dialling by the terminal (7) of a telephone number of a short-message delivery server (13) in a telecommunication network (15) which includes the fixed telephone network (8), in order to establish a connection between the terminal (7) and the server (13) and,
- once the connection has been established with the server (13), transmission by the terminal (7) of the text of the short message contained in the record associated with the assigned activated interactive means (10) and each called telephone number contained in this same record.

2. A service for the transmission of short messages in accordance with claim 1, in which each association of each assigned interactive means (10) with a record is dependent upon an identifier of the user, and in that the service also includes the stage which consists, prior to detection (5) by the terminal of the activation of one of the interactive means (10), of acquiring an identifier of the user in order to determine the associated record for each assigned interactive means (10).

3. A service for the transmission of short messages from a terminal (7) of a user, this terminal (7) being connected to the fixed telephone network (8) by a telephone line (9) identified by a telephone number known as the calling number, **characterised in that** it includes the initial stages which consist of:
- establishment (1), for the telephone line (9), of a specified number of records, each composed of a short message associated with at least one called telephone number,
- storage (2) of each record in a database (15) in a telecommunication network which includes the fixed telephone network (8),
- assignment (3) of interactive means (10) of the terminal (7) to the transmission of short messages,
- association (4) of each assigned interactive means (10) with a record,
and **in that** for each transmission of a short message from the terminal (7), it includes the stages which consist of:
- detection (5) by the terminal (7) of the activation of one of the assigned interactive means (10) of the terminal (7) in order to trigger the transmission of the short message contained in the record associated with the activated interactive means (10) to each called telephone number contained in this same record, this transmission taking place in accordance with the following stages which consist of:
- dialling by the terminal (7) of a telephone number of a short-message delivery server in the telecommunication network (15), in order to establish a connection between the terminal (7) and the server (13) and,
- once the connection has been established, transmission by the terminal (7) of a code associated with the assigned activated interactive means (10),
- after identification by the server (13) of the calling telephone number, extraction from the database by the server (13) of the records established for the telephone line (9) and identified by the calling telephone number,
- on the basis of the code, extraction from the records by the server (13) of the record associated with the assigned activated interactive means (10) and
- transmission by- the server -(13) of the text of the message contained in the record associated with the assigned activated interactive means (10) and each called telephone number contained in this same record.

4. A service for the transmission of short messages in accordance with claim 3, in which each association of each assigned interactive means (10) with a record is dependent upon an identifier of the user, and in that the service also includes the stage which consists, prior to the detection (5) by the terminal of the activation of one of the interactive means (10), of acquiring an identifier of the user in order to determine the associated record for each assigned interactive means (10).

5. A service for the transmission of short messages in accordance with claim 4, **characterised in that** it also includes the stage which consists of:
- transmission by the terminal (7) of the identifier of the user, once the connection has been established with the server (13),
and **in that** the extraction of the record associated with the assigned activated interactive means (10) is also effected from the identifier of the user.

6. A service for the transmission of short messages in accordance with the one of claims 4 and 5, **characterised in that** it also includes the initial stage which consists of:
- determination of a customising interface to the database, and **in that**, in order to modify the contents of a record established for the telephone line, the process also includes the stage which consists of:
- communication, from a communication terminal, with the customising interface.

7. A terminal (7) for the transmission of short messages which possesses means for implementation of the stages executed by the terminal of one of the preceding claims, and including at least:
- one interactive means (10) assigned to the transmission of short messages,
- at least as many memory spaces (11) as there are assigned interactive means (10), each memory space (11) being associated with an assigned interactive means (10) and containing a specific item of information of this assigned interactive means (10) and,
- at least means (12) for storing at least one telephone number of a short-message delivery server (13) in the telecommunication network (15).

8. A terminal (7) for the transmission of short messages in accordance with claim 7, **characterised in that** it also includes a customising interface (19, 20) for modifying the contents of a memory space (11) and/or for modifying each telephone number of a short-message delivery server (13) stored in the terminal (7).

9. A terminal (7) for the transmission of short messages in accordance with the one of claims 7 and 8, in which each interactive means (10) consists of a key.

10. A terminal (7) for the transmission of short messages in accordance with the one of claims 7 and 8, in which each interactive means (10) includes a voice-frequency recognition device.

11. A terminal (7) for the transmission of short messages in accordance with the one of claims 7 and 8, in which each interactive means (10) includes a high-frequency (HF) recognition device.

## Patentansprüche

1. Versanddienst von kurzen Meldungen ab einem Terminal (7) eines Benutzers, wobei dieses Terminal (7) durch eine durch eine als anrufende bezeichnete Telefonnummer identifizierte Telefonleitung (9) an ein telefonisches Festnetz (8) angeschlossen ist, **dadurch gekennzeichnet, dass** die Anfangsstufen aus Folgendem bestehen:
- der Herstellung (1) einer bestimmten Anzahl von Aufzeichnungen für die Telefonleitung (9), welche jeweils aus einer wenigstens einer angerufenen Telefonnummer zugewiesenen kurzen Meldung gebildet werden,
- der Speicherung (2) jeder Aufzeichnung durch das Terminal (7),
- der Zuordnung (3) der interaktiven Mittel (10) des Terminals (7) zu dem Versand kurzer Meldungen,
- der Zuweisung (4) jedes einer Aufzeichnung zugeordneten interaktiven Mittels (10) und dass er für jeden Versand einer kurzen Meldung vom Terminal (7) aus die Stufen umfasst, bestehend aus:
- der Feststellung (5) der Aktivierung eines der zugeordneten interaktiven Mittel (10) des Terminals (7) durch das Terminal (7) zum Auslösen der Übertragung der in derselben Aufzeichnung enthaltenen kurzen Meldung an jede in der dem aktiven interaktiven Mittel (10) zugewiesene Aufzeichnung enthaltene angerufene Telefonnummer, wobei die Übertragung gemäß den folgenden Stufen erfolgt, die in Folgendem bestehen:
- im Wählen einer Telefonnummer eines Lieferservers (13) kurzer Meldungen eines das telefonische Festnetz (8) umfassenden Telekommunikationsnetzes (15) durch das Terminal (7) zur Herstellung einer Verbindung zwischen dem Terminal (7) und dem Server (13) und
- Nach Herstellung der Verbindung mit dem Server (13) die Ausgabe des Textes der in der dem aktivierten zugewiesenen interaktiven Mittel (10) zugewiesene Aufzeichnung enthaltenen kurzen Meldung und jeder in derselben Aufzeichnung enthaltenen angerufenen Telefonnummer durch das Terminal (7).

2. Versanddienst von kurzen Meldungen gemäß Anspruch 1, in dem jedes Zuweisen jedes einer Aufzeichnung zugeordneten interaktiven Mittels (10) von einer Kennung des Benutzers abhängt und dass der Dienst darüber hinaus die Stufe umfasst, die im Erwerb einer Kennung des Benutzers vor der Feststellung eines der interaktiven Mittel (10) durch das Terminal (7) besteht, um für jedes zugeordnete interaktive Mittel (10) die zugewiesene Aufzeichnung zu bestimmen.

3. Versanddienst von kurzen Meldungen ab einem Terminal (7) eines Benutzers, wobei dieses Terminal (7) durch eine durch eine als anrufende bezeichnete Telefonnummer identifizierte Telefonleitung (9) an ein telefonisches Festnetz (8) angeschlossen ist, **dadurch gekennzeichnet, dass** die Anfangsstufen aus Folgendem bestehen:
- der Herstellung (1) einer bestimmten Anzahl von Aufzeichnungen für die Telefonleitung (9), welche jeweils aus einer wenigstens einer angerufenen Telefonnummer zugewiesenen kurzen Meldung gebildet werden,
- der Speicherung (2) jeder Aufzeichnung durch eine Datenbank eines das telefonische Festnetz (8) umfassenden Telekommunikationsnetzes (15) ,
- der Zuordnung (3) der interaktiven Mittel (10) des Terminals (7) zu dem Versand kurzer Meldungen,
- der Zuweisung (4) jedes einer Aufzeichnung zugeordneten interaktiven Mittels (10) und dass er für jeden Versand einer kurzen Meldung vom Terminal (7) aus die Stufen umfasst, bestehend aus:
- der Feststellung (5) der Aktivierung eines der zugeordneten interaktiven Mittel (10) des Terminals (7) durch das Terminal (7) zum Auslösen der Übertragung der in derselben Aufzeichnung enthaltenen kurzen Meldung auf jede in der dem aktiven interaktiven Mittel (10) zugewiesenen Aufzeichnung enthaltene angerufene Telefonnummer, wobei die Übertragung gemäß den folgenden Stufen erfolgt, die in Folgendem bestehen:
- im Wählen einer Telefonnummer eines Lieferservers (13) kurzer Meldungen eines Telekommunikationsnetzes (15) durch das Terminal (7) zur Herstellung einer Verbindung zwischen dem Terminal (7) und dem Server (13) und
- nach Herstellung der Verbindung der Ausgabe eines dem zugeordneten aktivierten interaktiven Mittel (10) zugewiesenen Codes durch das Terminal (7)
- nach Identifizierung der anrufenden Telefonnummer durch den Server (13) der Extraktion der hergestellten Aufzeichnungen aus der Datenbank durch den Server (13) für die durch die anrufende Telefonnummer identifizierten Telefonleitung (9)
- der Extraktion der dem aktivierten zugeordneten interaktiven Mittel (10) zugewiesenen Aufzeichnung aus den Aufzeichnungen durch den Server (13) ausgehend vom Code und
- der Ausgabe des Textes der in der dem aktivierten zugeordneten interaktiven Mittel (10) zugewiesenen Aufzeichnung enthaltenen kurzen Meldung und jeder in derselben Aufzeichnung enthaltenen angerufenen Telefonnummer durch den Server (13).

4. Versanddienst von kurzen Meldungen gemäß Anspruch 3, in dem jedes Zuweisen jedes einer Aufzeichnung zugeordneten interaktiven Mittels (10) von einer Kennung des Benutzers abhängt und dass der Dienst darüber hinaus die Stufe umfasst, die im Erwerb einer Kennung des Benutzers vor der Feststellung (5) eines der interaktiven Mittel (10) durch das Terminal besteht, um für jedes zugeordnete interaktive Mittel (10) die zugewiesene Aufzeichnung zu bestimmen.

5. Versanddienst von kurzen Meldungen gemäß Anspruch 4, **dadurch gekennzeichnet, dass** er darüber hinaus die Stufe umfasst, die in Folgendem besteht:
- In der zusätzlichen Ausgabe der Kennung des Benutzers durch das Terminal (7) nach der Herstellung der Verbindung mit dem Server (13),
und dass die Extraktion der dem aktivierten zugeordneten interaktiven Mittel (10) zugewiesenen Aufzeichnung darüber hinaus ausgehend von der Kennung des Benutzers durchgeführt wird.

6. Versanddienst von kurzen Meldungen gemäß Anspruch 4 und 5, **dadurch gekennzeichnet, dass** er darüber hinaus die Anfangsstufe umfasst, die in Folgendem besteht:
- in der Bestimmung einer Personalisations-Schnittstelle mit der Datenbank und dass das Verfahren darüber hinaus zur Änderung des Inhalts einer für die Telefonleitung hergestellten Aufzeichnung die Stufe umfasst, die in Folgendem besteht:
- in der Kommunikation mit der Personalisierungs-Schnittstelle ausgehend von einem Kommunikationsterminal.

7. Versandterminal (7) von kurzen Meldungen mit Umsetzungsmitteln der durch das Terminal einer der vorherigen Ansprüche ausgeführten Stufen und mit
- einem dem Versand von kurzen Meldungen zugeordneten interaktiven Mittel (10),
- ebenso viel Speicherplätzen (11) wie zugeordnete interaktive Mittel (10), wobei jeder Speicherplatz (11) einem zugeordneten interaktiven Mittel (10) zugewiesen ist und eine spezifische Information dieses zugeordneten interaktiven Mittels (10) enthält und,
- wenigstens einem Speichermittel (12) wenigstens einer Telefonnummer eines Verbindungsservers (13) von kurzen Meldungen des Telekommunikationsnetzes (15).

8. Versandterminal (7) von kurzen Meldungen gemäß Anspruch 7, **dadurch gekennzeichnet, dass** es darüber hinaus eine Personalisierungs-Schnittstelle (19, 20) zur Änderung des Inhaltes eines Speicherplatzes (11) und / oder zur Änderung jeder Telefonnummer eines Verbindungsservers (13) von im Terminal (7) gespeicherten kurzen Meldungen umfasst.

9. Versandterminal (7) von kurzen Meldungen gemäß Anspruch 7 und 8, in dem jedes interaktive Mittel (10) aus einer Taste gebildet wird.

10. Versandterminal (7) von kurzen Meldungen gemäß Anspruch 7 und 8, in dem jedes interaktive Mittel (10) eine Erkennungsvorrichtung der Stimmfrequenz umfasst.

11. Versandterminal (7) von kurzen Meldungen gemäß Anspruch 7 und 8, in dem jedes interaktive Mittel (10) eine Erkennungsvorrichtung für eine HF-Frequenz umfasst.
